# EUROPÄISCHE PATENTSCHRIFT

(11) **EP 1 633 991 B1**
(45) Veröffentlichungstag und Bekanntmachung des Hinweises auf die Patenterteilung: **15.08.2007**
(21) Anmeldenummer: 04731606.2
(22) Anmeldetag: 07.05.2004
(51) Int. Cl.: F16D 33/16

(54) **VERFAHREN ZUR SCHMIERMITTELVERSORGUNG VON LAGERBAUEINHEITEN EINER HYDRODYNAMISCHEN KUPPLUNG UND HYDRODYNAMISCHE KUPPLUNG**
METHOD FOR SUPPLYING BEARING COMPONENTS OF A HYDRODYNAMIC CLUTCH WITH LUBRICANT AND CORRESPONDING HYDRODYNAMIC CLUTCH
PROCEDE D'ALIMENTATION EN LUBRIFIANT DE COMPOSANTS PALIERS D'UN COUPLAGE HYDRODYNAMIQUE ET COUPLAGE HYDRODYNAMIQUE

(30) Priorität: 13.06.2003 DE 10327154
(43) Veröffentlichungstag der Anmeldung: 15.03.2006
(73) Patentinhaber: Voith Turbo GmbH & Co. KG, 89522 Heidenheim (DE)
(72) Erfinder: HEIN, Hermann, 74564 Craislheim (DE); FUCHS, Marco, 74564 Crailsheim (DE); HOFFELD, Harald, 74564 Crailsheim (DE)
(74) Vertreter: Koch-Huld, Annegret Christa
(86) Internationale Anmeldenummer: PCT/EP2004/004871
(87) Internationale Veröffentlichungsnummer: WO 2004/111482

(56) Entgegenhaltungen:
- GB-A- 896 195
- US-A- 2 322 577
- US-A- 4 662 175

## Beschreibung

Die Erfindung betrifft ein Verfahren zur Schmiermittelversorgung von Lagereinheiten einer hydrodynamischen Kupplung, im Einzelnen mit den Merkmalen aus dem Oberbegriff des Anspruchs 1; ferner eine hydrodynamische Kupplung, nach dem Oberbegriff des Anspruchs 4. Eine solche Kupplung bzw. Verfahren ist aus US-A- 2,322,577 bekannt.

Hydrodynamische Kupplungen sind in einer Vielzahl von Ausführungen für unterschiedliche Anwendungszwecke vorbekannt. Zur Gewährleistung einer sicheren Funktionsweise sind diesen neben Leitungsverbindungen zum Zwecke des Befüllens und Entleerens des Arbeitsraumes weitere Funktionskreisläufe zugeordnet, die in ihrer Gesamtheit ein Betriebsmittelsystem bilden. Eine bekannte Ausführung einer hydrodynamischen Kupplung umfasst mindestens ein als Pumpenrad fungierendes Primärrad und ein als Turbinenrad fungierendes Sekundärrad, die miteinander einen torusförmigen Arbeitsraum bilden, in welchem das Betriebsmittel während des Betriebes der hydrodynamischen Kupplung umgewälzt wird. Der dabei entstehende Kreislauf wird als Arbeitskreislauf bezeichnet. Zum Zwecke der Kühlung des Betriebsmittels ist dem Arbeitskreislauf ein Kreislauf zugeordnet, welcher mit mindestens einem Einlass in den Arbeitsraum und einem Auslass aus dem Arbeitsraum verbunden ist und dem Direktumlauf von Betriebsmittel während des Betriebes der hydrodynamischen Kupplung vom Arbeitsraum nach außerhalb und wieder zum Arbeitsraum dient. Derartige Kupplungen werden daher auch als Kupplungen mit Direktumlauf bezeichnet. In diesem Kreislauf, welcher in der Regel als geschlossener Kreislauf ausgeführt ist, können dabei Kühleinrichtungen, beispielsweise in Form von Wärmetauschern oder Kühlern angeordnet sein. Dem Arbeitskreislauf, insbesondere dem torusförmigen Arbeitsraum ist des weiteren mindestens eine Versorgungsleitung zugeordnet, welche Betriebsmittel aus einem Behälter oder Tank in den Arbeitskreislauf einspeist. Diese Versorgungsleitung wird auch als Füllleitung bezeichnet und ist dabei über den Kreislauf für den Direktumlauf unter Ausnutzung dieser Leitungsverbindung mit dem Arbeitskreislauf verbunden. Ferner mit dem Arbeitskreislauf gekoppelt ist mindestens eine Leitung zum Zwecke der Entleerung. Vorzugsweise ist diese Leitung mit dem Kreislauf für den Direktumlauf unter Ausnutzung eines Teiles der Leitungsverbindungen des Kreislaufes für den Direktumlauf verbunden. Zusätzlich sind Verbindungsleitungen zwischen dem Behälter oder Tank und den einzelnen Lagerstellen der hydrodynamischen Kupplung zur Versorgung mit Schmiermittel vorgesehen, welche ein sogenanntes Schmiermittelversorgungssystem bilden. Vorzugsweise ist dabei das Schmiermittelversorgungssystem an die Füllleitung gekoppelt. Um während des Betriebes der hydrodynamischen Kupplung einen optimalen Kühlvorgang zu gewährleisten oder den Füllungsgrad zu beeinflussen, d.h. eine Führung von Betriebsmittel aus dem Arbeitskreislauf über einen externen Kreislauf in Form des Direktumlaufs wieder zum Arbeitskreislauf ist es erforderlich, dass in diesem Zustand kein zusätzliches Betriebsmittel angesaugt wird. Zu diesem Zweck sind in der Füllleitung Mittel zur Unterbrechung der Verbindung zwischen dem Tank und dem Arbeitskreislauf, im einfachsten Fall in Form einer Ventileinrichtung mit zwei Schaltstellungen vorgesehen. Die Anbindung erfolgt in Strömungsrichtung des Betriebsmittels vom Tank zum Arbeitskreislauf zwischen Tank und Arbeitkreislauf vor den Mitteln zur Unterbrechung der Verbindung zwischen Tank und Arbeitskreislauf. Ferner ist eine Filtereinrichtung vorgesehen, die sicherstellt, dass in allen Betriebszuständen - Füllen, Entleeren und Direktumlauf im Nennbetrieb sowie bei Teilfüllung und eventuell bei Umlaufkühlung - immer ausreichend gefiltertes Öl an den Lagerstellen zur Verfügung gestellt wird. Ein wesentlicher Nachteil dieser Ausführung besteht jedoch darin, dass ein Teil des in diesen Zuständen für die eigentliche Lagerschmierung vorgesehenen Betriebsmittels in Form von Öl in den Arbeitskreislauf der hydrodynamischen Kupplung gelangt, was zu einer ungewünschten Beeinflussung, insbesondere Veränderung des Füllungsgrades führt. Für den Einsatz hydrodynamischer Kupplungen zum Zwecke der Drehzahlregelung einer Arbeitsmaschine ist es dann zwingend erforderlich, den Füllungsgrad über ein getaktetes Entleerventil nach beziehungsweise einzuregeln.

Dies stellt jedoch gerade für Kupplungen, die einen Direktumlauf nutzen und die Füll- und Entleerverluste dem Arbeitskreislauf über die Füllleitung wieder zuführen eine Störgröße dar. Ein Ausgleich kann nur über sehr hohe Taktzahlen der Ventileinrichtungen erfolgen. Dies führt jedoch wiederum zu einer erheblichen Reduzierung der Ventillebensdauer und damit der Verfügbarkeit, d.h. der möglichen Betriebsdauer des gesamten Systems. Ferner ist der steuerungstechnische Aufwand für derartige Ausführungen enorm hoch.

Der Erfindung lag daher die Aufgabe zugrunde, ein Verfahren zur Versorgung der Lagereinheiten einer hydrodynamischen Kupplung mit Schmiermittel derart weiterzuentwickeln, dass der Füllungsgrad der hydrodynamischen Kupplung und damit dessen Betriebsweise nicht oder nur unmerklich beeinflusst wird. Die konstruktive Ausführung soll sich dabei durch ein hohes Maß an Sicherheit bei der Gewährleistung der Funktion der hydrodynamischen Kupplung, insbesondere der einzelnen Betriebsphasen sowie eine verlängerte Lebensdauer der einzelnen Komponenten und einen geringen Steuer- und Regelungsaufwand auszeichnen.

Die erfindungsgemäße Lösung ist durch die Merkmale der Ansprüche 1 und 4 charakterisiert. Vorteilhafte Ausgestaltungen sind in den Unteransprüchen wiedergegeben.

Erfindungsgemäß erfolgt die Versorgung der Lagereinheiten einer hydrodynamischen Kupplung, umfassend mindestens ein als Pumpenrad fungierendes Primärrad und ein als Turbinenrad fungierendes Sekundärrad, die miteinander einen torusförmigen Arbeitsraum zur Führung eines während des Betriebes sich einstellenden Arbeitskreislauf bilden, neben der Speisung über die Füllleitung in den Zuständen der Unterbrechung des Betriebsmittetflusses zwischen Betriebsmittelbehälter und Einlass bzw. Direktumlauf über einen, ohnehin während des Betriebes vorhandenen Kreislauf zur Realisierung der Führung beziehungsweise des Umlaufs von Betriebsmittel während des Betriebes außerhalb des Arbeitskreislaufes in Form eines sogenannten Direktumlaufs. Dies bedeutet, dass die Versorgung der Lagereinheiten mit Schmiermittel aus dem Direktumlauf realisiert wird. Dieser Kreislauf ist dabei in der Regel als geschlossener Kreislauf ausgeführt und verbindet mindestens einen Einlass mit einem Auslass aus der hydrodynamischen Kupplung, insbesondere dem torusförmigen Arbeitsraum. Die Begriffe "Einlass" und "Auslass" sind dabei funktional und nicht zwangsläufig nur als konstruktive Meile zu verstehen. Diese sind in der Regel am Innenumfang des Torus in der Wand des oder der Schaufelräder eingearbeitet und über entsprechende Kanäle in der Wand der Schaufelräder mit den externen Leitungsteilen, d.h. in außerhalb des torusförmigen Arbeitsraumes zur Führung des Betriebsmittels im Direktumlauf vorgesehenen Leitungen oder Kanälen verbunden. Des weiteren ist der hydrodynamischen Kupplung, insbesondere dem torusförmigen Arbeitsraum wenigstens eine Füllleitung zugeordnet, die mit dem Kreislauf in Form des Direktumlaufs verbunden ist und über den Kreislauf für den Direktumlauf mit mindestens einem Einlass zum Arbeitsraum der hydrodynamischen Kupplung gekoppelt ist. Der Kreislauf für den Direktumlauf stellt unter Einbindung des Arbeitskreislaufes einen geschlossenen Kreislauf dar. Die Anbindung der Füllleitung an den Direktumlauf erfolgt dabei zwischen dem Auslass und dem Einlass.

Unter Füllleitung wird dabei die Leitung verstanden, die die Betriebsmittelquelle mit dem Direktumlauf verbindet, d. h. bis zur Knotenstelle.

An die Füllleitung ist ein Schmiermittelversorgungssystem angeschlossen, welches mindestens die Lagereinheiten der hydrodynamischen Kupplung, insbesondere von Pumpenrad und Turbinenrad bzw. der mit diesen drehfest gekoppelten Elementen mit Schmiermittel versorgt. Das Schmiermittelversorgungssystem wird bei Entkopplung der Füllleitung vom Arbeitsraum über den Kreislauf zum direkten Umlauf von Betriebsmittel außerhalb der hydrodynamischen Kupplung, insbesondere außerhalb des Arbeitsraumes gespeist, während bei Kopplung der Füllleitung an den Direktumlauf und damit mindestens einem Einlass zum Arbeitsraum über den Kreislauf für den Direktumlauf die Versorgung mit Schmiermittel unter Ausnutzung der jeweils gleichen Betriebsmittelversorgungsquelle realisiert wird.

Die Erfinder haben erkannt, dass in den Betriebszuständen Füllen, Entleeren sowie Umlaufkühlung bei Führung des Betriebsmittels im Direktumlauf aus dem Arbeitsraum der hydrodynamischen Kupplung eventuell über eine entsprechende Kühleinrichtung und wieder zurück zum Arbeitsraum der hydrodynamischen Kupplung die Entnahme von Betriebsmittel aus dem Kreislauf zur Realisierung eines Direktumlaufs vom Arbeitsraum außerhalb der Kupplung zurück zum Arbeitsraum und die damit verbundenen Betriebsmittelverluste für den Betrieb der hydrodynamischen Kupplung beziehungsweise die Funktion in diesen Betriebszuständen zum Zwecke der Lagerschmierung keine Rolle spielen. Die Lagerschmierung wird dabei aufgrund der im System zur Realisierung der Funktionsweise der hydrodynamischen Kupplung ohnehin vorhandenen Energie realisiert, d.h., es ist keine zusätzliche Einrichtung zur Bereitstellung von Schmiermittel für die Lagereinheiten erforderlich.

Unter einem weiteren Aspekt der Erfindung wird die im Direktumlauf geführte Betriebsmittelmenge bzw. das sich dort einstellende Druckniveau oder eine dieses wenigstens mittelbar charakterisierende Größe überwacht, wobei die Überwachung fortlaufend, in Zeitintervallen oder aber bei Bedarf erfolgen kann und bei Unterschreitung eines bestimmten Mindestniveaus eine Neueinspeisung von Betriebsmittel in den Arbeitskreislauf der hydrodynamischen Kupplung durch Kopplung der Füllleitung mit dem Arbeitskreislauf realisiert wird. Dadurch kann die Gesamtbetriebsdauer der Füllpumpe erheblich verringert werden, da diese nur bei tatsächlichem Erfordernis betrieben werden muss, was wiederum zu einer Erhöhung der Lebensdauer des Gesamtsystems beiträgt.

Gemäß einer Weiterentwicklung sind Mittel vorgesehen, welche während des Füllvorganges des torusförmigen Arbeitsraumes der hydrodynamischen Kupplung einen Übertritt von Betriebsmittel aus der Füllleitung in das Schmiermittelsystem erst bei Erreichen eines bestimmten Druckes im System, d.h. im Arbeitskreislauf und dem mit diesem gekoppelten Direktumlauf ermöglichen. Dies führt insbesondere während des Anfahrvorganges der hydrodynamischen Kupplung dazu, dass das eigentlich für die Lagereinheiten vorgesehene Schmiermittel in den Arbeitskreislauf der hydrodynamischen Kupplung gelangt solange der Druck im Direktumlauf geringer ist als das Druckniveau der Füllpumpe, was sich in einer schnelleren Befüllung der hydrodynamischen Kupplung und damit einer Verbesserung des Übertragungsverhaltens im Antriebsstrang niederschlägt.

Konstruktiv ist die hydrodynamische Kupplung, umfassend mindestens ein als Turbinenrad fungierendes Primärrad und ein als Turbinenrad fungierendes Sekundärrad, die miteinander einen torusförmigen Arbeitsraum bilden, in welchem während des Betriebes Betriebsmittel unter Bildung eines Arbeitskreislaufes umgewälzt wird, mit einem Betriebsmittelsystem ausgebildet, welches mindestens einen Kreislauf zur Führung von Betriebsmittel aus dem Arbeitsraum zum Zwecke der Kühlung während des Betriebes und der Wiederzufuhr zum Arbeitsraum in Form eines sogenannten Direktumlaufs umfasst. Das Betriebsmittelsystem umfasst des weiteren mindestens eine sogenannte Füllleitung, welche eine Betriebsmittelquelle mit dem Arbeitskreislauf, d.h. dem torusförmigen Arbeitsraum beziehungsweise einem Einlass in den torusförmigen Arbeitsraum verbindet. Diese Füllleitung ist dabei vorzugsweise mit dem Kreislauf für den Direktumlauf gekoppelt, wobei die Befüllung unter Ausnutzung von Leitungen des Direktumlaufs erfolgt. Der Begriff "Leitung" ist auch hier nur funktional zu verstehen, so dass neben rohr- oder schlauchförmigen Elementen auch in Wände eingearbeitete Kanäle unter diesen subsumiert werden. Um während des Betriebes, bei welchem zur Steuerung des Füllungsgrades und / oder zum Zwecke der Kühlung ein Umlauf von Betriebsmittel aus dem Arbeitsraum zum Arbeitsraum durch externe Führung außerhalb des torusförmigen Arbeitsraumes gewünscht wird, eine stabile Arbeitsweise zu gewährleisten ohne dass zusätzliches Betriebsmittel eingesaugt wird, sind Mittel zur Gewährleistung oder Unterbrechung des Betriebsmittelflusses in der Füllleitung zwischen Betriebsmittelquelle und Einlass bzw. Direktumlauf vorgesehen. Diese fungieren als Mittel zur wahlweisen Kopplung und Entkopplung der Füllleitung mit dem Arbeitsraum und umfassen im einfachsten Fall eine Ventileinrichtung mit wenigstens zwei Schaltstellungen. An die Füllleitung angeschlossen ist des weiteren erfindungsgemäß das Schmiermittelversorgungssystem, welches der Versorgung der einzelnen Lagerstellen mit Schmiermittel dient. Zur Realisierung der Versorgung der Lagereinheiten mit Schmiermittel aus dem Direktumlauf bestehen für die konkrete Ausgestaltung und Anbindung des Schmiermittelsystems an die Füllleitung und den Direktumlauf mehrere Möglichkeiten.

Gemäß einer ersten erfindungsgemäßen Ausgestaltung umfasst das Schmiermittelversorgungssystem eine erste Verbindungsleitung zwischen der Füllleitung und der Hauptschmiermittelleitung zu den einzelnen Lagereinheiten, wobei die Strömungsrichtung durch eine Ventileinrichtung, welche den Durchfluss in eine Richtung sperrt, vorzugsweise in Form eines Rückschlagventils, bestimmt wird. Die Anbindung der ersten Verbindungsleitung erfolgt in Strömungsrichtung zwischen Betriebsmittelquelle und Arbeitsraum vor den Mitteln zur Gewährleistung oder Unterbrechung des Betriebsmittelflusses in der Füllleitung bzw. zur wahlweisen Kopplung und / oder Entkopplung der Füllleitung vom Arbeitskreislauf und dem Kreislauf für den Direktumlauf. Die erste Verbindungsleitung kann auch Bestandteil der Hauptschmiermittelleitung sein. Des weiteren ist eine zweite Verbindungsleitung vorgesehen, welche den Direktumlauf mit dem Schmiermittelversorgungssystem verbindet und ebenfalls an der Füllleitung angeschlossen ist, wobei der Anschluss hinter den Mitteln zur Gewährleistung oder Unterbrechung des Betriebsmittelflusses in der Füllleitung bzw. zur wahlweisen Kopplung und / oder Entkopplung der Füllleitung vom Arbeitskreislauf und vom Kreislauf für den Betriebsmittelumlauf erfolgt. Die Anbindung der zweiten Verbindungsleitung erfolgt an die erste Verbindungsleitung in Strömungsrichtung des Betriebsmittels hinter dem ersten Rückschlagventil. Auch in der zweiten Verbindungsleitung ist eine Ventileinrichtung vorgesehen, die den Durchfluss in eine Richtung sperrt, vorzugsweise in Form eines sogenannten Rückschlagventils. Dabei sind die beiden Rückschlagventile - erstes Rückschlagventil und zweites Rückschlagventil - derart ausgeführt, dass jeweils nur die Fließrichtungen in Richtung des Knotenpunktes, d.h. der Anbindung der zweiten an die erste Verbindungsleitung, freigegeben werden. Mit dieser Lösung wird gewährleistet, dass bei Entkopplung der Füllleitung vom Arbeitskreislauf und dem Direktumlauf, beispielsweise im Falle des Entleervorganges oder auch Führung von Betriebsmittel aus dem torusförmigen Arbeitsraum im Direktumlauf wieder zum torusförmigen Arbeitsraum die Versorgung der einzelnen Lagereinheiten über das Schmiermittelsystem aus dem außerhalb des torusförmigen Arbeitsraumes geführten Teiles des Betriebsmittels, d.h. dem Direktumlauf erfolgt. Das Schmiermittelversorgungssystem wird somit Bestandteil des Betriebsmittelsystems. Das Betriebsmittel wird zu diesem Zweck über die zweite Verbindungsleitung in die erste Verbindungsleitung eingespeist und kann aufgrund der Anordnung des Rückschlagventils nicht in Richtung der Betriebsmittelquelle zurückfließen, sondern wird zwangsläufig den einzelnen Lagerstellen zugeführt. Zusätzlich besteht die Möglichkeit, dass in diesem Fall in der vom Direktumlauf entkoppelten Füllleitung eine Fördereinrichtung vorgesehen wird, welche zusätzlich noch Betriebsmittel in das Schmiermittelversorgungssystem einspeist, wobei die Einspeisung über die erste Verbindungsleitung erfolgt. Dies ist jedoch nicht zwingend erforderlich, weshalb auch auf die Betätigung der Füll- bzw. Betriebsmittelumwälzpumpe in diesem Fall verzichtet werden kann, insbesondere bei Speisung aus einem Betriebsmitteltank, welcher in Schwerkraftrichtung oberhalb der eigentlich zu versorgenden Lagereinheiten angeordnet ist. Im anderen Fall, d.h. bei Ankopplung der Füllleitung an den Kreislauf für den Direktumlauf und damit den Arbeitskreislauf wird ein Teil des über die Füllleitung zugeführten Betriebsmittels für die Schmierung der Lagereinheiten über die erste Verbindungsleitung für das Schmiermittelversorgungssystem abgezweigt, wobei dies erst zu einem Zeitpunkt erfolgt, wenn der Druck im Kreislauf für den Direktumlauf gleich oder größer ist als der Druck an der Fördereinrichtung.

Unter einem weiteren Aspekt der Erfindung sind bei der Lösung gemäß dem ersten Lösungsansatz in der ersten Verbindungsleitung Mittel zur Reinigung des Betriebsmittels vorgesehen, beispielsweise in Form von Filtereinrichtungen. Die Filtereinrichtung ist dabei derart platziert, diese hinter der Anbindung der zweiten Verbindungsleitung angeordnet ist.

Gemäß einem weiteren zweiten Lösungsansatz werden die Mittel zur Realisierung der Versorgung des Schmiermittelversorgungssystems bei entkoppelter Füllleitung aus dem Direktumlauf von einer Druckbegrenzungseinrichtung und einer Ventileinrichtung, welche den Durchfluss in eine Richtung sperrt, gebildet. Das Druckbegrenzungsventil ist dabei fremdgesteuert. Ein Vorteil besteht dabei darin, dass ein zusätzlicher Ölfilter mit Druckschalter zur Gewährleistung der sicheren Betriebsweise entfallen kann. Des weiteren besteht die Möglichkeit des Abschaltens der Fördereinrichtung. Das Druckniveau selbst ist kaum höher als gegenüber der Ausführung gemäß dem Stand der Technik.

Die Lösungen gemäß dem ersten und zweiten Lösungsansatz nutzen Teile der Füllleitung, insbesondere zwischen den Mitteln zur Realisierung oder Unterbrechung des Betriebsmittelflusses zum Arbeitsraum in der Regel eine Ventileinrichtung und der Kopplung der Füllleitung mit dem Direktumlauf zur Entnahme von Betriebsmittel aus dem Direktumlauf. Unter Füllleitung wir die Leitung verstanden, die sich von der Betriebsmittelquelle bis zum Direktumlauf erstreckt. Demgegenüber wird bei einer Ausführung gemäß dem dritten Lösungsansatz für die Entnahme aus dem Direktumlauf kein Teil der Füllleitung genutzt. Dazu ist eine separate Verbindungsleitung zwischen der Hauptschmiermittelleitung und dem Direktumlauf vorgesehen. Die erste Verbindungsleitung ist analog den zwei vorher genannten Lösungsansätzen vorgesehen. Allerdings besteht hier keine ständige Verbindung sondern sowohl die erste als auch die zweite Verbindungsleitung sind mit der Hauptschmiermitteleitung verbindbar. Die Mittel zur Gewährleistung der Entnahme von Betriebsmittel aus dem Kreislauf für den Direktumlauf zum Zwecke der Schmierung von Lagereinheiten durch Einspeisung in das Schmiermittelversorgungssystem dazu eine mittels Steuerdruck angesteuerte Ventileinrichtung. Diese ist zwischen den beiden Verbindungsleitungen und der Hauptschmiermittelleitung angeordnet und vorzugsweise als 3/2-Wegeventil ausgeführt. Das Schmiermittelversorgungssystem umfasst somit wiederum mindestens eine Hauptschmiermittelversorgungsleitung, welche wenigstens mittelbar, vorzugsweise jedoch direkt an die Füllleitung koppelbar ist und mit den zu schmierenden Lagerstellen über weitere Leitungen in Verbindung steht. Die Anbindung dieser über die erste Verbindungsleitung erfolgt in Durchflussrichtung von der Betriebsmittelquelle zum torusförmigen Arbeitsraum vor den Mitteln zur Gewährleistung oder Unterbrechung des Betriebsmittelstromes in der Füllleitung bzw. zur Kopplung beziehungsweise Entkopplung der Füllleitung mit dem Kreislauf für den Betriebsmittelumlauf und damit der Füllleitung zum Arbeitsraum. Im Füllzustand befindet sich die Ventileinrichtung der Mittel zur Gewährleistung der Entnahme von Betriebsmittel aus dem Kreislauf für den Direktumlauf in einer Schaltstellung, die eine Verbindung zwischen Betriebsmittelquelle und Direktumlauf gewährleistet. Ferner befinden sich die Mittel zur Kopplung und Entkoppelung ebenfalls in einer Schaltstellung, die eine Ankoppelung der Füllleitung an den Direktumlauf ermöglichen. Die Mittel zur Kopplung oder Entkoppelung der Entleerleitung vom Direktumlauf unterbrechen in diesem Zustand den Betriebsmittelfluss vom Direktumlauf zur Betriebsmittelquelle. Der Füllvorgang erfolgt in diesem Zustand vor allem über die Verbindungsleitung zwischen Direktumlauf und Füllleitung. Dies bedeutet, dass solange der sich im Direktumlauf einstellende Druck geringer ist als das Druckniveau der Füllpumpe dem Schmiermittelversorgungssystem kein Schmiermittel zugeführt wird und das gesamte Betriebsmittel, einschließlich des für das Schmiermittelsystem beabsichtigten Teils vorrangig der Kupplung zugeführt wird. Erst bei Erreichen der Druckgleichheit wird auch das Schmiermittelsystem versorgt. Dieses Vorgehen ermöglicht eine rasche Füllung der Kupplung und damit Bereitstellung der Betriebsbereitschaft. Im Funktionszustand der Umlaufkühlung ist zusätzlich die Verbindung zwischen Direktumlauf und Betriebsmittelquelle über die Entleerleitung freigeschaltet. Auch hier erfolgt die Bereitstellung des Betriebsmittels im wesentlichen über die Füllleitung.
Im Zustand des Direktumlaufs sind sowohl die Füllleitung als auch die Entleerleitung vom Direktumlauf und damit der hydrodynamischen Kupplung entkoppelt. Dies bedeutet, dass beide Ventileinrichtungen in der Füllleitung in die Schaltstellung verbracht werden, in der der Durchfluss in der Füllleitung von der Betriebmittelquelle abgekoppelt ist. In diesem Fall ist dann auch das Schmiermittelversorgungssystem von der Betriebsmittelquelle entkoppelt. Dabei erfolgt vorzugsweise die Ansteuerung der Mittel zur Gewährleistung der Abzweigung von Betriebsmittel aus dem Direktumlauf in Abhängigkeit der sich im Direktumlauf einstellenden Druckverhältnisse. Es ergeben sich bei dieser Lösung die gleichen Vorteile wie bei den anderen beiden Lösungsansätzen.

Bei allen Lösungen können ferner weitere Aggregate in den Kreisläufen angeordnet sein, beispielsweise Kühleinrichtungen. Vorzugsweise sind diese im Direktumlauf angeordnet. Des Weiteren erfolgt bei allen vorzugsweise der Ablauf aus dem Schmiermittelsystem in das Gehäuse der Kupplung, so daß diese Betriebsmittelmenge über Fördereinrichtungen und eine die Staudruckpumpe dem Direktumlauf zuführbar ist. Damit kann eine Umlaufschmierung realisiert werden.

Die erfindungsgemäße Lösung wird nachfolgend anhand von Figuren erläutert. Darin ist im Einzelnen folgendes dargestellt:

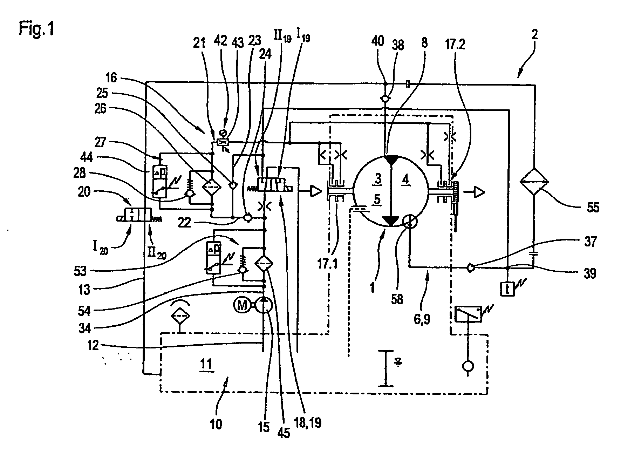

- Figur 1: verdeutlicht in schematisch vereinfachter Darstellung anhand einer hydrodynamischen Kupplung mit Betriebsmittelsystem den Grundaufbau des Betriebsmittelsystems und der Integration des Schmiermittelversorgungssystems für die Lagereinheiten im Betriebsmittelsystem gemäß einem ersten Lösungsansatz;

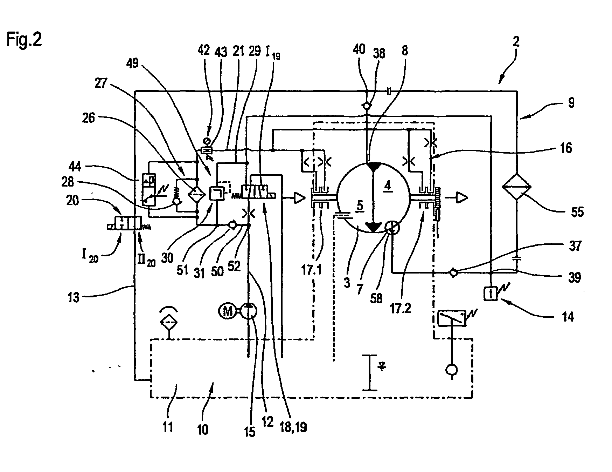

- Figur 2: verdeutlicht in schematisch vereinfachter Darstellung anhand einer hydrodynamischen Kupplung mit Betriebsmittelsystem den Grundaufbau des Betriebsmittelsystems und der Integration des Schmiermittelversorgungssystems für die Lagereinheiten im Betriebsmittelsystem gemäß einem zweiten Lösungsansatz;

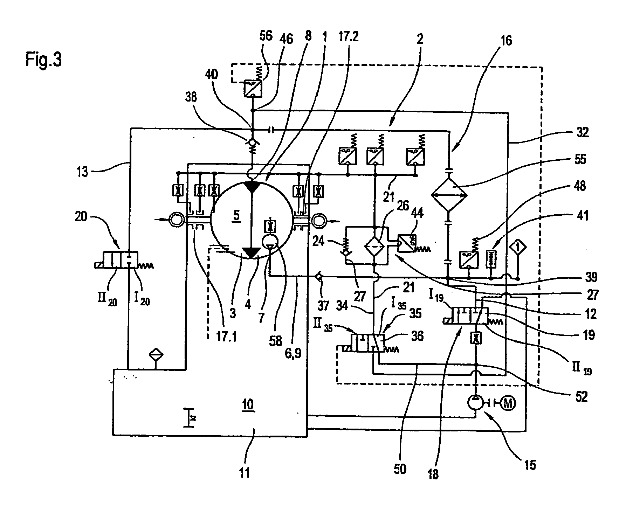

- Figur 3: verdeutlicht in schematisch vereinfachter Darstellung anhand einer hydrodynamischen Kupplung mit Betriebsmittelsystem den Grundaufbau des Betriebsmittelsystems und der Integration des Schmiermittelversorgungssystems für die Lagereinheiten im Betriebsmittelsystem gemäß einem dritten Lösungsansatz.

Die Figur 1 verdeutlicht in schematisch vereinfachter Darstellung eine hydrodynamische Kupplung 1 mit einem Betriebsmittelsystem 2 zur Versorgung der hydrodynamischen Kupplung 1 mit Betriebsmittel und Führung von Betriebsmittel. Die hydrodynamische Kupplung 1 umfasst mindestens ein als Pumpenrad fungierendes Primärrad 3 und ein als Turbinenrad fungierendes Sekundärrad 4, die miteinander einen mit Betriebsmittel befüllbaren, vorzugsweise torusförmigen Arbeitsraum 5, bilden. Dem sich im Arbeitsraum 5 einstellenden Arbeitskreislauf ist ein externer Kreislauf 6 zugeordnet, welcher mindestens einen Auslass 7 aus dem torusförmigen Arbeitsraum mit mindestens einem Einlass 8 in den torusförmigen Arbeitsraum verbindet. Dieser externe Kreislauf 6 wird auch als Direktumlauf 9 bezeichnet und kann für sich allein als geschlossener Kreislauf angesehen werden. Der Direktumlauf 9 dient der Führung von Betriebsmittel vom zum torusförmigen Arbeitsraum 5 während des Betriebes. Das Betriebsmittel kann dabei einer Kühlung unterworfen werden und ferner unter Umständen einer Reinigung, wobei in diesem Fall beispielsweise eine Kühleinrichtung 55 in diesem vorgesehen ist. Der Direktumlauf 9 wird dabei ferner genutzt, um Füllungsgradvariationen vornehmen zu können, indem die Durchflussmenge im Direktumlauf variiert wird. Das Betriebsmittelsystem 2 umfasst des weiteren eine Betriebsmittelquelle 10, welche beispielsweise in Form eines Behälters oder Tankes 11 ausgebildet ist. Die Betriebsmittelquelle 10 ist über mindestens eine Füllleitung 12 mit dem torusförmigen Arbeitsraum 5, insbesondere einem Einlass 8 in den torusförmigen Arbeitsraum 5 wenigstens mittelbar gekoppelt. Die Kopplung erfolgt dabei über den Direktumlauf 9 bzw. die diesen charakterisierenden Leitungen und Kanäle. Femer ist zum Zwecke der Entleerung mindestens eine Entleerleitung 13 vorgesehen, welche mindestens einen Auslass 7 mit der Betriebsmittelquelle 10 in Form des Behälters 11 wenigstens mittelbar verbindet. Die Verbindung zwischen der Betriebsmittelquelle 10 und dem Einlass 8 erfolgt dabei über die Anbindung der Füllleitung 12 an den Direktumlauf 9 in Strömungsrichtung betrachtet hinter dem Auslass 7 und vor dem Einlass 8. Zur Vermeidung eines Einströmens von Betriebsmittel in den Auslass 7 ist der Anbindung der Füllleitung 12 an den Direktumlauf 9 in Strömungsrichtung vom Auslass 7 zum Einlass 8 betrachtet ein Rückschlagventil 37 im Direktumlauf 9 vorgeschaltet. Dieses sperrt die Strömungsrichtung von der Anbindung der Füllleitung 12 an den Direktumlauf 9 in Richtung Auslass 7. Die Kopplung der Entleerleitung 13 mit mindestens einem Auslass 7 erfolgt dabei durch Anbindung der Entleerleitung 13 an den Direktumlauf 9. Dabei erfolgt in Strömungsrichtung zwischen dem Auslass 7 und dem Einlass 8 betrachtet die Kopplung der Entleerleitung 13 mit dem Direktumlauf 9 hinter der Anbindung der Füllleitung 12 an den Direktumlauf 9. Zur Vermeidung eines Abströmens von Betriebsmittel über den Einlass 8 ist diesem in Strömungsrichtung vom Auslass 7 zum Einlass 8 hinter der Anbindung der Entleerleitung 13 ein Rückschlagventil 38 angeordnet. In Abhängigkeit der Anordnung des Betriebsmittelbehälters 11 beziehungsweise der Betriebsmittelquelle 10 ist in der Füllleitung 12 eine Fördereinrichtung 15 in Form einer Pumpe erforderlich. Lediglich bei Anordnung der Betriebsmittelquelle 10 oberhalb des Arbeitskreislaufes beziehungsweise Arbeitsraumes 5 in Schwerkraftrichtung betrachtet kann auf eine derartige Fördereinrichtung 15 unter Umständen verzichtet werden.

Der Kupplung 1 ist ferner ein Schmiermittelversorgungssystem 16 für die Lagereinheiten 17 zur Lagerung der hydrodynamischen Kupplung, insbesondere der Lagereinheiten 17.1 zur Lagerung des Primärrades 3 und 17.2 zur Lagerung des Sekundärrades 4 zugeordnet. Das Schmiermittelversorgungssystem 16 ist an das Betriebsmittelsystem 2 und in entsprechender Weise an die einzelnen Leitungen beziehungsweise Kanäle zur Führung des Betriebsmittels zur Entnahme von Schmiermittel gekoppelt. Die Anbindung erfolgt dabei über die Füllleitung 12.

Die Verbindung zwischen der Betriebsmittelquelle 10 und dem Einlass 8, d.h. der Füllleitung 12 und dem Einlass 8 ist unterbrechbar. Dazu sind entsprechende Mittel 18 zur Gewährleistung oder Unterbrechung des Betriebsmittelflusses zwischen der Betriebsmittelquelle 10 und dem Einlass 8, insbesondere der Anbindung der Füllleitung 12 an den Direktumlauf 9, d.h. der Knotenstelle 39 vorgesehen. Diese Mittel dienen der Kopplung oder Entkoppelung der Füllleitung 12 vom Direktumlauf 9 und umfassen in der Regel eine Ventileinrichtung 19, welche im dargestellten Fall als 3/2-Wegeventil ausgeführt ist. Die Ventileinrichtung 19 umfasst somit mindestens zwei Schaltstellungen eine erste Schaltstellung I₁₉ und eine zweite Schaltstellung II₁₉. Dies gilt in Analogie auch für die Verbindung zwischen dem Auslass 7 und der Betriebsmittelquelle. Diese erfolgt über den Direktumlauf 9. Dazu ist in der Entleerleitung 13 beziehungsweise hinter der Knotenstelle 40 zur Anbindung der Entleerleitung 13 an den Direktumlauf 9 ebenfalls eine Ventileinrichtung 20 vorgesehen, die ebenfalls mindestens zwei Schaltstellungen umfasst eine erste Schaltstellung I₂₀ und eine zweite Schaltstellung II₂₀. Diese Ventileinrichtung 20 ist dabei als 2/2-Wegeventil ausgebildet. Durch die Einstellung der Schaltstellungen der Ventileinrichtungen 19 und 20 können verschiedene Funktionszustände der Kupplung 1 realisiert werden. Der Füllvorgang ist dabei dadurch charakterisiert, dass die Ventileinrichtung 19 in der Füllleitung 12 in der ersten Schaltstellung I₁₉ eine Verbindung zwischen Betriebsmittelquelle 10 und Direktumlauf 9 und damit den Betriebsmittelfluss in dieser Richtung freigibt. In diesem Fall befindet sich die zweite Ventileinrichtung 20 ebenfalls in ihrer ersten Funktionsstellung I₂₀, welche durch eine Unterbrechung des Betriebsmittelflusses in der Entleerleitung 13 und damit eine Entkopplung von der Betriebsmittelquelle 10 charakterisiert ist. Das Betriebsmittel wird dabei über die Fördereinrichtung in Form einer Füll- bzw. Betriebsmittelumwälzpumpe 15 in den hydrodynamischen Kreislauf, insbesondere den Arbeitsraum 5 und den sich dort einstellenden hydrodynamischen Kreislauf gepumpt. Im Anfahrbereich, d.h. dem Betriebsbereich, der durch einen geringeren Druck im Direktumlauf als das Druckniveau der Füllpumpe 15 charakterisiert ist, gelangt das Betriebsmittel über die Füllleitung 12 in die Kupplung. Nur in diesem Betriebszustand kann Betriebsmittel aus dem Schmiermittelversorgungssystem 16 in die Kupplung gelangen. Damit wird in vorteilhafter Weise ein schneller Füllvorgang gewährleistet.

Während des Betriebes der hydrodynamischen Kupplung 1 stellt sich selbsttätig entsprechend den Verhältnissen im Arbeitsraum 5 im Direktumlauf 9 ein Kreislauf ein, welcher Betriebsmittel aus dem Arbeitsraum 5 nach Führung außerhalb wieder in den Arbeitsraum 5 führt. Zur Realisierung einer optimalen Kühlung wird das Betriebsmittel während des Betriebes einer sogenannten Umlaufkühlung unterzogen. Zu diesem Zweck wird das aus dem Arbeitsraum 5 über den mindestens einen Auslass 7 geführte Betriebsmittel über einen Teil der Leitungen des Direktumlaufs 9 geführt und über die Entleerleitung in der Schaltstellung II₂₀ der Ventileinrichtung 20 dem Betriebsmittelbehälter 11 zugeführt. In diesem kann es einer Kühlung unterzogen werden. Ferner wird das dem torusförmigen Arbeitsraum 5 vorhandenen Kreislauf somit entzogene Betriebsmittel über die Füllleitung 12 nachgespeist. In diesem Fall befindet sich die Ventileinrichtung 19 in der ersten Schaltstellung I₁₉. Es ergibt sich somit neben dem Direktumlauf 9 ein weiterer Betriebsmittelkreislauf, bei welchem ein Teil des Betriebsmittels aus dem Direktumlauf 9 entnommen wird und neu zugeführt. Der Direktumlauf 9 bildet in diesem Funktionszustand für einen Teil des Betriebsmittels eine Art Bypass zum Betriebsmittelbehälter 11.

Zum Zwecke der Entleerung befindet sich die erste Ventileinrichtung 19 in der zweiten Schaltstellung II₁₉. In diesem Fall fördert die Förderpumpe vom Betriebsmittelbehälter 11 unter Umgehung der Kupplung 1, insbesondere des Arbeitskreislaufes in dem Betriebsmittelbehälter 11. Die Ventileinrichtung 20 befindet sich in der zweiten Ventilstellung II₂₀, in welcher der Durchfluss in der Entleerleitung 13 vom Auslass 7, insbesondere dem Direktumlauf 9 zum Behälter 11 gewährleistet ist.

Um in allen Betriebszuständen eine ausreichende Lagerschmierung zu gewährleisten, ist das Schmiermittelversorgungssystem 16 in entsprechender Weise in das Betriebsmittelsystem 2 integriert und an die Füllleitung 12 angebunden. Um jedoch alle Funktionszustände abzudecken erfolgt die Anbindung auch an die Leitungen bzw. mindestens eine Leitung des Direktumlaufs 9. Im dargestellten Fall erfolgt neben der Anbindung mindestens einer Schmiermittelleitung, beispielsweise in Form einer Hauptschmiermittelleitung 21 an die Füllleitung 12 vor den Mitteln 18 zur Unterbrechung des Betriebsmittelflusses in Fliessrichtung von der Betriebsmittelquelle zum Arbeitsraum 5 betrachtet die Anbindung des weiteren hinter den Mitteln 18 zur Unterbrechung des Betriebsmittelflusses, d.h. an den Teil der Füllleitung 12, der über die Mittel 18 mit dem Direktumlauf 9 verbindbar ist. Die Hauptschmiermittelleitung 21 ist somit direkt und über wenigstens eine, oder aber zwei Verbindungsleitungen - eine erste Verbindungsleitung 22 und eine zweite Verbindungsleitung 23 mit der Füllleitung 12 verbunden. Die erste Verbindungsleitung 22 dient dabei der Anbindung der Hauptschmiermittelleitung 21 an die Füllleitung 12 vor den Mitteln 18 zur Unterbrechung des Betriebsmittelflusses zum Arbeitsraum, die zweite Verbindungsleitung 23 dient der Kopplung des Direktumlaufs 9, insbesondere der Füllleitung 12 mit der Hauptschmiermittelversorgungsleitung 21, wobei die Anbindung an die Füllleitung 12 hinter den Mitteln 18 erfolgt. Zur Vorgabe der Strömungsrichtung, d.h. aus der Füllleitung 12 und dem Direktumlauf 9 zur Hautschmiermittelversorgungsleitung 21 sind jeweils entsprechende Einrichtungen vorgesehen, vorzugsweise in Form von Rückschlagventilen. Dabei ist ein erstes Rückschlagventil 24 in der ersten Verbindungsleitung 22 und ein zweites Rückschlagventil 25 in der zweiten Verbindungsleitung 23 angeordnet. Das erste Rückschlagventil 24 ermöglicht dabei im Betriebsmittelfluss von der Betriebsmittelquelle 10 über die Füllleitung 12 unabhängig von der Schaltstellung der Ventileinrichtung 19 zur Hauptschmiermittelversorgungsleitung 21. Ferner ermöglicht das zweite Rückschlagventil 25 in der zweiten Verbindungsleitung 23 in der Schaltstellung II₁₉ der ersten Ventileinrichtung 19 eine Versorgung der Hauptschmiermittelversorgungsleitung 21 mit Schmiermittel aus dem Direktumlauf 9 über den Teil der Füllleitung 12, der sich hinter den Mitteln 18 befindet bei Unterbrechung des Betriebsmittelflusses von der Betriebsmittelquelle 10 zum Einlass 8 durch die Ventileinrichtung 19. In der Hauptschmiermittelversorgungsleitung 21 ist dabei ferner eine Filtereinrichtung 26, der ein Bypass 27 zugeordnet ist. In diesem Bypass 27 ist ebenfalls ein Rückschlagventil 28 vorgesehen. Dieses stellt im Fall eines Verstopfens der Filtereinrichtung 26 sicher, dass Betriebsmittel auch unter Umgehung der Filtereinrichtung 26 in die Hauptschmiermittelversorgungsleitung 21 gelangt.

Auch während der Umlaufkühlung, die durch die Führung von Betriebsmittel aus dem Arbeitsraum 5 über den Direktumlauf 9 und eines Teils über die Entleerleitung 13, den Behälter 11 und wiederum die Füllleitung 12 zum Direktumlauf 9 und dem Einlass 8 charakterisiert ist, wird das Schmiermittel über die Füllleitung 12 bereitgestellt und es kann somit eine Lagerschmierung in ausreichender Weise realisiert werden. Die Ventileinrichtung 19 befindet sich in der Schaltstellung I₁₉ und die Ventileinrichtung 20 in der Schaltstellung II₂₀. In diesem Fall wird jedoch das zur Schmierung erforderliche Betriebsmittel nur aus der Füllleitung 12 entnommen, wobei die Entnahme sowohl vor den Mitteln 18 als auch nach den Mitteln 18 über jeweils die Anbindungsstellen der einzelnen Verbindungsleitungen 22 und 23 erfolgt.

Während des Betriebes ohne Umlaufkühlung wird das Schmiermittel allein aus dem Direktumlauf 9 entnommen. Dies gilt, solange der Druck im Direktumlauf 9 größer ist, als der durch die Füllpumpe erzeugte Druck. Die Ventileinrichtung 19 befindet sich in der Schaltstellung II₁₉ und die Ventileinrichtung 20 in der Schaltstellung I₂₀. Das Rückschlagventil 22 in der ersten Verbindungsleitung, welches vor der Anbindung der zweiten Verbindungsleitung 23 integriert ist, verhindert ein Abströmen von Betriebsmittel in die Füllleitung 12.

In allen Leitungsabschnitten sind ferner zusätzliche Elemente zur Ausführung zusätzlicher Funktionen vorgesehen. Wie bereits ausgeführt sind Mittel 42 zur Beeinflussung der Durchflussmenge in der Hauptschmiermittelversorgungsleitung 21 vorgesehen. Diese umfassen beispielsweise eine Stelldrossel 43. Im Leitungsabschnitt 34 der Füllleitung 12 der Fördereinrichtung 15 nachgeordnet kann ferner eine Filtereinrichtung 45, der ein Bypass 53 zugeordnet ist, angeordnet werden. Im Bypass ist ein Rückschlagventil 54 vorgesehen. Femer ist diesem ein Druckschalter 57 zugeordnet. Diese Einrichtungen dienen zur Sicherstellung der Betriebsmittelzufuhr auch bei verstopften Filter 45 unter Umgehung dessen.

Zur Überwachung einer das Druckniveau im Direktumlauf 9 bzw. die Betriebsmittelmenge wenigstens indirekt charakterisierenden Größe kann das Betriebsmittelversorgungssystem 2 hier nicht dargestellte Mittel zur Überwachung des Druckniveaus im Betriebsmittelversorgungssystem 2, insbesondere dem Direktumlauf 9 umfassen. Bei Druckabfall im Direktumlauf 9 wird das erforderliche Betriebsmittel dann über die Füllleitung 12 nachgespeist, indem die Füllleitung 12 wieder an den Direktumlauf 9 gekoppelt wird. Femer sind Mittel 55 zur Kühlung des Betriebsmittels im Direktumlauf 9 vorgesehen. Diese umfassen im einfachsten Fall einen Wärmetauscher. Zur Überwachung der Temperatur ist ein Temperatursensor 14 vorgesehen.

Die Figur 2 verdeutlicht eine alternative Ausgestaltung des Betriebsmittelsystems 2 gemäß Figur 1 zur Realisierung der Schmiermittelversorgung aus dem Direktumlauf 9. Der Grundaufbau der Kupplung 1 und der Kreisläufe entspricht dabei dem in der Figur 1 beschriebenen, weshalb für gleiche Elemente die gleichen Bezugszeichen verwendet werden. Bei dieser Lösung ist die Hauptschmiermittelversorgungsleitung 21 dabei über eine Verbindungsleitung 50 mit der Füllleitung 12 verbunden, wobei die Anbindung in Strömungsrichtung zwischen der Betriebsmittelquelle 10 und dem Direktumlauf 9 betrachtet vor den Mitteln 18 erfolgt. Ferner ist die Hauptschmiermittelversorgungsleitung 21 desweiteren wenigstens indirekt über eine Verbindungsleitung 29 mit der Füllleitung 12 im Abschnitt hinter der Ventileinrichtung 19 mit dem Direktumlauf 9 gekoppelt. Diese Verbindungsleitung 29 bildet somit einen Bypass 49 zur Füllleitung 12 zwischen der Fördereinrichtung 15 und dem Anschluss der Füllleitung 12 an den Direktumlauf 9 unter Einschluss der Mittel 18. In diesem angeordnet ist ein Druckbegrenzungsventil 30. Zur Vermeidung eines Rückflusses von Betriebsmittel aus dem Direktumlauf 9 in die Füllleitung 12 sind in der Verbindungsleitung 50 zwischen der Knotenstelle 52 von Verbindungsleitung 50 und Füllleitung 12 und der Knotenstelle 51 von Verbindungsleitung 29 und Verbindungsleitung 50 ein Rückschlagventil 31 angeordnet. In der Hauptschmiermittelversorgungsleitung 21 ist dabei ferner eine Filtereinrichtung 26, der ein Bypass 27 zugeordnet ist, angeordnet. In diesem Bypass 27 ist ebenfalls ein Rückschlagventil 28 vorgesehen.

Dem Bypass 27 zugeordnet ist ein Druckschalter 44. Diese Anordnung stellt sicher, dass auch bei Verstopfung des Filters 26 Betriebsmittel in die Hauptschmiermittelversorgungsleitung 21 gelangt.

Während des Füllvorganges oder dem Zustand des Betriebes mit Umlaufkühlung befindet sich die Ventileinrichtung 19 in der ersten Schaltstellung I₁₉. In dieser wird somit Betriebsmittel zum einen von der Betriebsmittelquelle 10 über die Fördereinrichtung 15, das Rückschlagventil 31, die Filtereinrichtung 26 der Hauptschmiermittelversorgungsleitung 21 direkt zugeführt, wobei über diese lediglich ein Teil des in der Füllleitung 12 befindlichen Betriebsmittels entnommen wird, während der restliche Teil über die 3/2-Wegeventileinrichtung 19 der hydrodynamischen Kupplung 1, insbesondere dem Arbeitsraum 5 durch Ankopplung an den Direktumlauf 9 zugeführt wird. Das als Schmieröl vorgesehene Betriebsmittel für die Lagereinheiten 17.1, 17.2 kann nur im Anfahrbereich in den Kreislauf im Arbeitsraum 5 gelangen, solange der Druck im Direktumlauf 9 noch im Aufbau begriffen und damit geringer ist als das Druckniveau der Füllpumpe, d.h. der Fördereinrichtung 15. Die Betriebsmittelentnahme aus dem Direktumlauf 9 erfolgt beispielsweise in unterbrochener Verbindung der Füllleitung 12 mit dem Direktumlauf 9 über den Teil der Füllleitung 12, der den Mitteln 18 nachgeordnet ist und der den Bypass 33 bildenden Verbindungsleitung 29, welche hinter den Mitteln 18 an den mit dem Direktumlauf 9 gekoppelten Teil der Füllleitung 12 gekoppelt ist. Das Druckbegrenzungsventil 30 besitzt dabei die gleiche Funktion, wie das Rückschlagventil 25 in Figur 1

Die Figur 3 verdeutlicht eine besonders vorteilhafte Ausgestaltung eines Betriebsmittelsystems 2 mit einem in diesem integrierten Schmiermittelversorgungssystem 16 für mindestens die Lagereinheiten 17.1, 17.2. Der Grundaufbau entspricht dabei dem in den Figuren 1 und 2 beschriebenen, weshalb für gleiche Elemente die gleichen Bezugszeichen verwendet werden. Auch hier erfolgt die Anbindung der Hauptschmiermittelversorgungsleitung 21 wie in der Figur 2 beschrieben vorzugsweise direkt an die Füllleitung 12 vor den Mitteln 18 zur Unterbrechung der Verbindung zwischen Betriebsmittelquelle 10 und dem Direktumlauf 9, d.h. zur Unterbindung des Betriebsmittelflusses in der Füllleitung 12. Denkbar wäre auch eine Ankoppelung über eine Zwischenleitung. Auch hier ist ferner eine Verbindungsleitung 32 vorgesehen, die eine Verbindung des Direktumlaufs 9 mit der Hauptschmiermittelversorgungsleitung 21 gewährleistet. Diese Verbindung erfolgt dabei direkt und ist frei von einer Nutzung von Leitungsbestandteilen der Füllleitung 12. Zur wahlweisen Realisierung der Schmiermittelversorgung über den Direktumlauf 9 oder die Füllleitung 12 ist hier eine weitere Ventileinrichtung 35 vorgesehen, welche im dargestellten Fall als 3/2-Wegeventil 36 ausgebildet ist und der wahlweisen Anbindung der Verbindungsleitung 32 an die Hauptschmiermittelleitung 21 oder der Füllleitung 12 an die Hauptschmiermittelleitung 21 dient. Die Kopplung der Füllleitung 12 an die Hauptschmiermittelleitung 21 erfolgt im dargestellten Fall über eine Verbindungsleitung 50. Deren Anbindung an die Füllleitung 12 erfolgt der Fördereinrichtung 15 nachgeschaltet an einer Knotenstelle 52. Die Ventileinrichtung 35 weist wenigstens zwei Schaltstellungen auf. Vorzugsweise ist diese jedoch stufenlos steuerbar. Die erste Schaltstellung der Ventileinrichtung 35 ist mit I₃₅ bezeichnet und dient der Verbindung zwischen der Fördereinrichtung 15 mit der Hauptschmiermittelversorgungsleitung 21 über die Verbindungsleitung 50. In dieser Schaltstellung erfolgt die Betriebsmittelführung von der Betriebsmittelquelle 10 über die Füllleitung 12 sowohl zum Schmiermittelversorgungssystem 16 als auch bei entsprechend gewählter Schaltstellung der Ventileinrichtung 19, insbesondere der ersten Schaltstellung I₁₉ zur Versorgung der hydrodynamischen Kupplung 1, insbesondere des Arbeitsraumes 5 mit Betriebsmittel durch Einspeisung in den Direktumlauf 9. Solange erfolgt die Betriebsmittelführung vorrangig über die Füllleitung 12. Befindet sich die Ventileinrichtung 19 in der zweiten Schaltstellung, d.h. die Betriebsmittelzufuhr zur hydrodynamischen Kupplung 1, insbesondere zum torusförmigen Arbeitsraum 5 wird unterbrochen und die hydrodynamische Kupplung 1 arbeitet nur mit Direktumlauf 9, wird das erforderliche Schmiermittel direkt aus dem Direktumlauf 9 entnommen. Die Ventileinrichtung 35 wird dazu fremdgesteuert, wobei vorzugsweise der Zulauf vom Betriebsmittelbehälter 11 über die Füllleitung 12 und damit die Verbindungsleitung 50 vollständig unterbrochen wird. Der Übergang kann dabei in Stufen oder aber stufenlos erfolgen, wobei in diesem Fall die Ventileinrichtung 35 im einfachsten Fall beispielsweise über den sich im Bereich der Anbindung der Verbindungsleitung 32 an den Direktumlauf 9 einstellenden Druck gesteuert wird. Dabei ist die Betriebsmittelzufuhr über die Füllleitung 12 unterbrochen. Die Fördereinrichtung 15 fördert nur in den Betriebsmittelbehälter 11, d.h. die Betriebsmittelquelle 10 oder aber wird ganz abgeschalten. Das Schmiermittel wird dann allein aus dem Direktumlauf 9 über die Verbindungsleitung 32 der Hauptschmiermittelversorgungsleitung 21 zugeführt.

Zur Überwachung der Temperatur im Direktumlauf 9 umfasst das Betriebsmittelversorgungssystem 2 Mittel 41 zur Überwachung der Temperatur, insbesondere dem Direktumlauf 9 bzw. einer mit diesem gekoppelten Leitung.
Ferner vorgesehen ist ein dem Direktumlauf 9 zugeordneter Druckschalter 56. Dieser hat die Funktion in Abhängigkeit des Druckes im Direktumlauf 9 die Ventileinrichtung 35 zu betätigen und damit die Schmiermittelversorgung entweder aus dem Direktumlauf 9 oder über die Betriebsmittelquelle bereitzustellen bei gleichzeitiger Abkoppelung der Füllleitung 12 vom Direktumlauf 9.

Die Steuerung der Mittel 18 und der anderen Ventileinrichtungen hinsichtlich ihrer Betätigung zueinander erfolgt dabei in der Regel vorzugsweise unabhängig, d.h. nicht zwangsgekoppelt miteinander. Die einzelnen Betriebszustände werden wie folgt realisiert:
a) Füllen
   Der Füllvorgang wird durch Realisierung der Verbindung zwischen Betriebsmitteltank 11 und Arbeitsraum 5 über die Füllleitung 12 und den Direktumlauf 9 bei angetriebener Füllpumpe 15 umgesetzt. Die Ventileinrichtung 19 befindet sich in der ersten Schaltstellung, die Ventileinrichtung 35 ebenfalls. Die Entleerleitung 13 ist unterbrochen bzw. wird vom Direktumlauf 9 getrennt. Die Ventileinrichtung 20 befindet sich dementsprechend in der ersten Schaltstellung. Entsprechend der Dimensionierung von 56 wird das Schmiermittelversorgungssystem 16 solange vorrangig über die Betriebsquelle 10 mit Betriebsmittel versorgt, bis der sich im Direktumlauf 9 aufbauende Druck gleich oder größer dem Druckniveau der Füllpumpe 15 ist. Erst dann wird Schmiermittel aus dem Direktumlauf 9 abgezweigt.
b) Direktumlauf
   In dieser Betriebsweise ist die Verbindung zwischen dem Betriebsmittelbehälter 11 und dem Direktumlauf 9 unterbrochen. Über die Füllleitung 12 erfolgt keine Einspeisung bzw. Nachspeisung mehr. Die Ventileinrichtung 18 befindet sich in der zweiten Schaltstellung, die Ventileinrichtung 35 fremdgesteuert über den Druckschalter 56 ebenfalls. Die Verbindung des Direktumlaufs 9 mit dem Betriebsmittelbehälter 11 ist durch die Ventileinrichtung 20 unterbrochen. Das als Schmiermittel benötigte Betriebsmittel wird direkt aus dem Direktumlauf 9 abgezogen. Dies erfolgt über die Verbindungsleitung 32..Das Betriebsmittel wird dabei vorzugsweise vorher im Direktumlauf 9 über den Wärmetauscher 55 geführt. Entsprechend der Dimensionierung des Druckschalters 56 erfolgt die Versorgung des Schmiermittelsystems 16 solange ein bestimmter Druck im Direktumlauf 9 nicht unterschritten wird über diesen erst dann durch Umschaltung der Ventileinrichtung 35 in die erste Schaltposition I₃₅ über die Betriebsmittelquelle 10.
   Erst wenn signalisiert wird, dass sich der Druck oder eine andere die Betriebsmittelmenge im Direktumlauf 9 wenigstens mittelbar charakterisierende Größe sich ändert bzw. von einem bestimmten voreinstellbaren im Direktumlauf zu haltenden Wert abweicht, wird über die Füllleitung 12 neues Betriebsmittel in den Direktumlauf 9 nachgespeist.
   Die Versorgung des Schmiermittelsystems 16 über den Direktumlauf 9 erfolgt gesteuert, vorzugsweise direkt in Abhängigkeit des Druckes im Direktumlauf 9. Ist dieser zu gering, wird die Kupplung 1, insbesondere der Direktumlauf 9 mit der Füllleitung 12, insbesondere dem Teil verbunden, der sich von der Betriebsmittelquelle 10 bis zu den Mitteln 18 erstreckt, d. h. die Unterbrechung in der Füllleitung 12 wird aufgehoben.
   Die Steuerung der Ventileinrichtung 35 erfolgt über einen Druckschalter 56, der der Knotenstelle 40 nachgeordnet ist und im Bereich der Knotenstelle 46 der Verbindungsleitung 32 mit dem Direktumlauf 9 angeordnet ist.
c) Entleeren
   Die Ventileinrichtungen 19 und 35 befinden sich in einer Schaltstellung, die die Verbindung von Betriebsmittelquelle 10 und Füllleitung 12 bzw. den Durchfluss in der Füllleitung unterbindet. Die Entleerleitung 13 verbindet den Direktumlauf 9 mit dem Betriebsmittelbehälter 11.
d) Umlaufkühlung
   Die Ventilstellungen der Ventile 19, 35 entsprechen denen des Füllvorganges. Das in der Entleerleitung angeordnete Ventil 20 befindet sich in der Schaltstellung wie beim Entleeren. Das Schmiermittelsystem 16 wird über den Betriebsmittelbehälter 11 mit Schmiermittel versorgt.

Bei allen beschriebenen Lösungen erfolgt der Ablauf der Lagerschmierölmenge in das Gehäuse der Kupplung 1 und wird von dort über eine Fördereinrichtung einer Staudruckpumpe 58 und über diese wieder dem Direktumlauf 9 zugeführt.

Die in den Figuren dargestellten Konfigurationen sind Beispiele. Diese können hinsichtlich der Art und Ausbildung einzelner Elemente, wie Ventileinrichtungen abgewandelt werden. Entscheidend ist die Ausbildung der Kupplung mit Direktumlauf 9, wobei dieser zur Bereitstellung der Schmiermittelversorgung genutzt wird. Dabei wird der Füllungsgrad der Kupplung nahezu konstant gehalten.

### Bezugszeichenliste

- 1: hydrodynamische Kupplung
- 2: Betriebsmittelsystem
- 3: Primärrad
- 4: Sekundärrad
- 5: Arbeitsraum
- 6: externer Kreislauf
- 7: Auslass
- 8: Einlass
- 9: Direktumlauf
- 10: Betriebsmittelquelle
- 11: Betriebsmittelbehälter
- 12: Füllleitung
- 13: Entleerleitung
- 14: Temperatursensor
- 15: Fördereinrichtung
- 16: Schmiermittelversorgungssystem
- 17: Lagereinheiten
- 17.1,17.2: Lagereinheiten
- 18: Mittel zur Unterbrechung oder Gewährleistung des Betriebsmittelflusses zwischen der Betriebsmittelquelle und dem Einlass 8
- 19: Ventileinrichtung
- 20: Ventileinrichtung
- 21: Hauptschmiermittelversorgungsleitung
- 22: erste Verbindungsleitung
- 23: zweite Verbindungsleitung
- 24: Rückschlagventil
- 25: Rückschlagventil
- 26: Filtereinrichtung
- 27: Bypass
- 28: Rückschlagventil
- 29: Verbindungsleitung
- 30: Druckbegrenzungsventil
- 31: Rückschlagventil
- 32: Verbindungsleitung
- 34: Leitungsabschnitt
- 35: Ventileinrichtung
- 36: 3/2-Wegeventil
- 37: Rückschlagventil
- 38: Rückschlagventil
- 39: Knotenstelle
- 40: Knotenstelle
- 41: Mittel zur Erfassung der Temperatur
- 42: Mittel zur Beeinflussung der Durchflussmenge in der Hauptschmiermittelversorgungsleitung
- 43: Stelldrossel
- 44: Druckschalter
- 45: Filtereinrichtung
- 46: Knotenstelle
- 48: Druckschalter
- 49: Bypass
- 50: Verbindungsleitung
- 51: Knotenstelle
- 52: Knotenstelle
- 53: Bypass
- 54: Rückschlagventil
- 55: Mittel zur Kühlung
- 56: Druckschalter
- 57: Druckschalter
- 58: Straudruckpumpe
- I₁₉, II₁₉: Schaltstellung
- I₂₀. II₂₀: Schaltstellung
- I₃₅, II₃₅: Schaltstellung

## Patentansprüche

1. Verfahren zur Schmiermittelversorgung von Lagerbaueinheiten (17.1, 17.2) einer hydrodynamischen Kupplung (1)
- mit einem Primärrad (3) und einem Sekundärrad (4), die miteinander einen mit Betriebsmittelbefüllbaren Arbeitsraum (5) bilden und mit einem Betriebsmittelsystem (2), umfassend
einen wenigstens einen Auslass (7) aus dem Arbeitraum (5) mit einem Einlass (8) in den Arbeitsraum (5) verbindenden Direktumlauf (9), eine Betriebsmittelquelle (10) und mindestens eine Füllleitung (12) über die der Einlass (8) wenigstens mittelbar mit der Betriebsmittelquelle (10) koppelbar ist und mindestens eine Entleerleitung (13) über die der Auslass (7) wenigstens mittelbar mit der Betriebsmittelquelle (10) verbindbar ist, wobei die Füllleitung (12) und die Entleerleitung (13) über den Direktumlauf (9) mit dem Einlass (8) bzw. dem Auslass (7) gekoppelt sind sowie ein Schmiermittelversorgungssystem (16), welches mit der Füllleitung (12) koppelbar ist;
die während aller Betriebszustände mit Schmiermittel versorgt wird, wobei wenigstens im Zustand Füllen die Versorgung des Schmiermittelversorgungssystems (16) über die mit der Betriebsmittelquelle (10) koppelbare Füllleitung (12) erfolgt, **dadurch gekennzeichnet, dass** im Funktionszustand Direktumlauf (9) des Betriebsmittels zwischen Auslass (7) und Einlass (8) die Versorgung des Schmiermittelversorgungssystems (16) allein aus dem Direktumlauf (9) erfolgt.

2. Verfahren nach Anspruch 1, **dadurch gekennzeichnet, dass** im Zustand Umlaufkühlung bei Betriebsmittelfluss vom Direktumlauf (9) über die Entleerleitung (13) die Versorgung des Schmiermittelversorgungssystems (16) aus der Betriebsmittelquelle (10) über die Füllleitung (12) erfolgt.

3. Verfahren nach einem der Ansprüche 1 oder 2, **dadurch gekennzeichnet, dass** das Druckniveau im Direktumlauf (9) überwacht wird und bei Unterschreitung eines vordefinierten Grenzwertes eine Nachspeisung von Betriebsmittel in den Direktumlauf (9) durch Zuschaltung der Füllleitung (12) erfolgt.

4. Hydrodynamische Kupplung (1)
mit einem Primärrad (3) und einem Sekundärrad (4), die miteinander einen mit Betriebsmittelbefüllbaren Arbeitsraum (5) bilden;
mit einem Betriebsmittelsystem (2), umfassend
- wenigstens einen Auslass (7) aus dem Arbeitraum (5) mit mindestens einem Einlass (8) in den Arbeitsraum (5) verbindenden Direktumlauf (9)
- eine Betriebsmittelquelle (10)
- mindestens eine Füllleitung (12) über die der Einlass (8) wenigstens mittelbar mit der Betriebsmittelquelle (10) koppelbar ist und mindestens eine Entleerleitung (13) über die der Auslass (7)
wenigstens mittelbar mit der Betriebsmittelquelle (10) verbindbar ist; die Füllleitung (12) und die Entleerleitung (13) sind über den Direktumlauf (9) mit dem Einlass (8) bzw. dem Auslass (9) gekoppelt;
das Betriebsmittelsystem (2) umfasst Mittel (18) zur Gewährleistung oder Unterbrechung des Betriebsmittelflusses in der Füllleitung (12) von der Betriebsmittelquelle (10) zum Einlass (8) und Mittel (20) zur Gewährleistung oder Unterbrechung des Betriebsmittelflusses in der Entleerleitung (13) zwischen Auslass (7) und Betriebsmittelquelle (10);
mit einem Schmiermittelversorgungssystem (16) zur Versorgung mindestens der Primärrad (3) und Sekundärrad (4) abstützenden Lagereinheiten (17.1, 17.2) mit Schmiermittel;
das Schmiermittelversorgungssystem (16) ist in Strömungsrichtung hinter der Betriebsmittelquelle (10) und vor den Mitteln (18) zur Gewährleistung oder Unterbrechung des Betriebsmittetflusses in der Füllleitung (12) von der Betriebsmittelquelle (10) zum Einlass (8) an die Füllleitung (12) angeschlossen;
**gekennzeichnet durch** die folgenden Merkmale:
das Schmiermittelversorgungssystem (16) ist des weiteren wenigstens mittelbar an den Direktumlauf (9) koppelbar,
mit Mitteln zur Abzweigung von Betriebsmittel aus dem Direktumlauf (9).

5. Hydrodynamische Kupplung (1) nach Anspruch 4, **gekennzeichnet durch** die folgenden Merkmale:
die Hauptschmiermittelleitung (21) des Schmiermittelversorgungssystems (16) ist direkt oder über eine erste Verbindungsleitung (22, 50) über die Füllleitung (12) an die Betriebsmittelquelle koppelbar;
die Anbindung der Hauptschmiermittelleitung (21) oder der ersten Verbindungsleitung (22, 50) erfolgt in Strömungsrichtung zwischen Betriebsmittelquelle (10) und Arbeitsraum (5) vor den Mitteln (18) zur Gewährleistung oder Unterbrechung des Betriebsmittelflusses in der Füllleitung (12) an diese;
die Mittel zur Abzweigung von Betriebsmittel aus dem Direktumlauf (9) umfassen eine zweite Verbindungsleitung (23, 29, 32), welche den Direktumlauf (9) mit dem Schmiermittelversorgungssystem (16) verbindet; die Verbindung zwischen Direktumlauf (9) und
Schmiermittelversorgungssystem (16) erfolgt direkt **durch** die Kopplung der zweiten Verbindungsleitung (23, 29, 32) mit der Hauptschmiermittelleitung (21) oder indirekt über die erste Verbindungsleitung (22).

6. Hydrodynamische Kupplung (1) nach Anspruch 5, **dadurch gekennzeichnet, dass** die zweite Verbindungsleitung (23, 29) an die Füllleitung (12) in Strömungsrichtung von der Betriebsmittelquelle (10) zur Kupplung (1) betrachtet hinter den Mitteln (18) zur Gewährleistung oder Unterbrechung des Betriebsmittelflusses in der Füllleitung (12) an diese gekoppelt ist und die Verbindung mit dem Direktumlauf (9) über diesen Teil der Füllleitung (12) erfolgt.

7. Hydrodynamische Kupplung (1) nach Anspruch 5 oder 6, **dadurch gekennzeichnet, dass** in der Hauptschmiermittelversorgungsleitung (21) oder der ersten Verbindungsleitung (22, 50) in Strömungsrichtung des Betriebsmittels von der Betriebsmittelquelle zur Hauptschmiermittelleitung (21) Mittel (24, 31) zur Sperrung der Strömungsrichtung vom Direktumlauf (9) zur Betriebsmittelquelle (10) vorgesehen sind und die Anbindung der zweiten Verbindungsleitung (23, 29) an die Hauptschmiermittelversorungsleitung (21) oder die erste Verbindungsleitung (22) hinter den Mitteln (24) zur Sperrung der Strömungsrichtung vom Direktumlauf (9) zur Betriebsmittelquelle (10) erfolgt.

8. Hydrodynamische Kupplung (1) nach einem der Ansprüche 5 bis 7, **dadurch gekennzeichnet, dass** in der zweiten Verbindungsleitung (23, 29, 32) vor der Anbindung an die Hauptschmiermittelversorgungsleitung (21) oder an die erste Verbindungsleitung (22, 50) Mittel zur Sperrung der Strömungsrichtung vom Direktumlauf (9) zur Betriebsmittelquelle (10, 11) vorgesehen sind.

9. Hydrodynamische Kupplung (1) nach Anspruch 8, **dadurch gekennzeichnet, dass** in der zweiten Verbindungsleitung (29) vor der Anbindung an die Hauptschmiermittelversorungsleitung (21) oder an die erste Verbindungsleitung (50) ein Druckbegrenzungsventil (30) angeordnet ist.

10. Hydrodynamische Kupplung (1) nach einem der Ansprüche 7 bis 9, **dadurch gekennzeichnet, dass** die Mittel ein in der ersten und/oder zweiten Verbindungsleitung (22, 23) angeordnetes Rückschlagventil (24, 25) umfassen.

11. Hydrodynamische Kupplung (1) nach Anspruch 5, **gekennzeichnet durch** die folgenden Merkmale:
die zweite Verbindungsleitung (32) verbindet den Direktumlauf (9) mit dem Schmiermittelversorgungssystem (16) frei von einer Nutzung von Teilen der Füllleitung (12);
mit Mitteln (35) zur Kopplung der beiden Verbindungsleitungen (50, 32), der Verbindungsleitung zur Realisierung einer Verbindung zwischen Füllleitung (12) und Hauptschmiermittelleitung (21) und der Verbindungsleitung (32) zwischen Direktumlauf (9) und Hauptschmiermittelleitung (21) mit der Hauptschmiermittelleitung (21).

12. Hydrodynamische Kupplung (1) nach Anspruch 11, **dadurch gekennzeichnet, daß** die Mittel (35) eine steuerbare Ventileinrichtung (36) umfassen.

13. Hydrodynamische Kupplung (1) nach Anspruch 12, **dadurch gekennzeichnet, daß** die Ventileinrichtung wenigstens zwei Schaltstellungen zur wahlweisen Kopplung der Hauptschmiermittelleitung (21) mit der Füllleitung (12) oder dem Direktumlauf (9) aufweist.

14. Hydrodynamische Kupplung (1) nach einem der Ansprüche 4 bis 13, **dadurch gekennzeichnet, dass** in der Hauptschmiermittelleitung (21) eine Filtereinrichtung (26) vorgesehen ist und dieser ferner ein Druckschalter (44) in einem Bypass (27) zugeordnet ist.

15. Hydrodynamische Kupplung (1) nach einem der Ansprüche 4 bis 14, **dadurch gekennzeichnet, dass** in der Füllleitung (12) eine Fördereinrichtung (15) vorgesehen ist und die Anbindungen der Verbindungsleitungen (32, 50, 22) hinter dieser erfolgen.

16. Hydrodynamische Kupplung (1) nach einem der Ansprüche 4 bis 15, **dadurch gekennzeichnet, dass** dem Direktumlauf (9) Mittel (46) zur Erfassung des Druckniveaus zugeordnet sind.

17. Hydrodynamische Kupplung (1) nach einem der Ansprüche 4 bis 16, **dadurch gekennzeichnet, dass** in der Hauptschmiermittelleitung (21) mindestens eine Blende 42 angeordnet ist.

18. Hydrodynamische Kupplung (1) nach einem der Ansprüche 4 bis 17, **dadurch gekennzeichnet, dass** dem Direktumlauf (9) Mittel zur Erfassung der Temperatur im Direktumlauf (9) zugeordnet sind.

## Claims

1. A method for supplying lubricant to bearing modules (17.1, 17.2) of a hydrodynamic coupling (1)
- with a primary wheel (3) and a secondary wheel (4) which jointly form a working chamber (5) which can be filled with operating medium and with an operating medium system (2), comprising an at least single outlet (7) from the working chamber (5) with a direct circulation (9) connecting an inlet (8) into the working chamber (5), an operating medium source (10) and at least one filling line (12), through which the inlet (8) can be coupled at least indirectly with the operating medium source (10), and at least one discharge line (13), through which the outlet (7) can be connected at least indirectly with the operating medium source (10), with the filling line (12) and the discharge line (13) being coupled via the direct circulation (9) with the inlet (8) and the outlet (7), and a lubricant supply system (16) which can be coupled with the filling line (12);
- which coupling is supplied during all operating states with lubricant, with at least in the state of filling the supply of the lubricant supply system (16) occurring via the filling line (12) which can be coupled with the operating medium source (10), **characterized in that** in the functional state of direct circulation (9) of the operating medium between outlet (7) and inlet (8) the supply of the lubricant supply system (16) occurs solely from the direct circulation (9).

2. A method according to claim 1, **characterized in that** in the state of recirculating cooling when the operating media flows from the direct circulation (9) via the discharge line (13) the supply of the lubricant supply system (16) occurs from the operating medium source (10) via the filling line (12).

3. A method according to one of the claims 1 or 2, **characterized in that** the pressure level in the direct circulation (9) is monitored and when it falls below a predetermined limit value there will be an additional feed of operating medium into the direct circulation (9) by activating the filling line (12).

4. A hydrodynamic coupling (1), comprising a primary wheel (3) and a secondary wheel (4) which jointly form a working chamber (5) which can be filled with operating medium, an operating medium system (2), comprising
- at least one outlet (7) from the working chamber (5) with at least one direct circulation connecting an inlet (8) into the working chamber (5);
- an operating medium source (10);
- at least one filling line (12) through which the inlet (8) can be coupled at least indirectly with the operating medium source (10) and at least one discharge line (13) through which the outlet (7) can be connected at least indirectly with the operating medium source (10);
the filling line (12) and the discharge line (13) are coupled via the direct circulation (9) with the inlet (8) and the outlet (9);
the operating medium system (2) comprises means (18) for ensuring or interrupting the flow of operating medium in the filling line (12) from the operating medium source (10) to the inlet (8) and means (20) for ensuring or interrupting the flow of operating medium in the discharge line (13) between the outlet (7) and the operating medium source (10);
with a lubricant supply system (16) for supplying at least the bearing units (17.1, 17.2) with lubricant which support the primary wheel (3) and the secondary wheel (4);
the lubricant supply system (16) is connected in the direction of flow behind the operating medium source (10) and in front of the means (18) for ensuring or interrupting the flow of operating medium in the filling line (12) from the operating medium source (10) to the inlet (8) to the filling line (12); **characterized by** the following features:
the lubricant supply system (16) can further be coupled at least directly with the direct circulation (9);
with means for branching off operating medium from the direct circulation (9).

5. A hydrodynamic coupling (1) according to claim 4, **characterized by** the following features:
the main lubricant line (21) of the lubricant supply system (16) can be coupled directly or via a first connecting line (22, 50) via the filling line (12) to the operating medium source;
the linkage of the main lubricant line (21) or the first connecting line (22, 50) is made in the direction of flow between operating medium source (10) and
working chamber (5) before the means (18) for ensuring or interrupting the operating medium flow in the filling line (12) to the same;
the means for branching off operating medium from the direct circulation (9) comprise a second connecting line (23, 39, 32) which connects the direct circulation (9) with the lubricant supply system (16);
the connection between the direct circulation (9) and lubricant supply system (16) occurs directly by coupling the second connecting line (23, 39, 32) with the main lubricant line (21) or indirectly via the first connecting line (22).

6. A hydrodynamic coupling (1) according to claim 5, **characterized in that** the second connecting line (23, 29) is coupled with the filling line (12), when seen in the direction of flow from the operating medium source (10) to the coupling (1), behind the means (18) for ensuring or interrupting the operating medium flow in the filling line (12) to the same and the connection with the direct circulation (9) occurs via this part of the filling line (12).

7. A hydrodynamic coupling (1) according to claim 5 or 6, **characterized in that** means (24, 31) for blocking the direction of flow from the direct circulation (9) to the operating medium source are provided in the main lubricant supply line (21) or the first connecting line (22, 50) in the direction of flow of the operating medium from the operating medium source to the main lubricant line (21) and the linkage of the second connecting line (23, 29) to the main lubricant supply line (21) or the first connecting line (22) occurs behind the means (24) for blocking the direction of flow from the direct circulation (9) to the operating medium source (10).

8. A hydrodynamic coupling (1) according to one of the claims 5 to 7, **characterized in that** means for blocking the direction of flow from the direct circulation (9) to the operating medium source (10, 11) are provided in the second connecting line (23, 29, 32) before the linkage to the main lubricant supply line (21) or the first connecting line (22, 50).

9. A hydrodynamic coupling (1) according to claim 8, **characterized in that** a pressure-relief valve (30) is arranged in the second connecting line (29) before the linkage to the main lubricant supply line (21) or the first connecting line (50).

10. A hydrodynamic coupling (1) according to one of the claims 7 to 9, **characterized in that** the means comprise a check valve (24, 25) arranged in the first and/or second connecting line (22, 23).

11. A hydrodynamic coupling (1) according to claim 5, **characterized by** the following features:
the second connecting line (32) connects the direct circulation (9) with the lubricant supply system (16) free from any use of parts of the filling line (12); with means (35) for coupling the two connecting lines (50, 32), the connecting line for realizing a connection between the filling line (12) and the main lubricant line (21) and the connecting line (32) between direct circulation (9)
and the main lubricant line (21) with the main lubricant line (21).

12. A hydrodynamic coupling (1) according to claim 11, **characterized in that** the means (35) comprise a controllable valve device (36).

13. A hydrodynamic coupling (1) according to claim 12, **characterized in that** the valve device comprises at least two switching positions for optional coupling of the main lubricant line (21) with the filling line (12) or the direct circulation (9).

14. A hydrodynamic coupling (1) according to one of the claims 4 to 13, **characterized in that** a filter device (26) is provided in the main lubricant line (31) and said filter device is further associated with a pressure switch (44) in a bypass (27).

15. A hydrodynamic coupling (1) according to one of the claims 4 to 14, **characterized in that** a conveying device (15) is provided in the filling line (12) and the linkage of the connecting lines (32, 50, 22) occurs behind the same.

16. A hydrodynamic coupling (1) according to one of the claims 4 to 15, **characterized in that** means (46) for detecting the pressure level are associated with the direct circulation (9).

17. A hydrodynamic coupling (1) according to one of the claims 4 to 16, **characterized in that** at least one baffle (42) is arranged in the main lubricant line (21).

18. A hydrodynamic coupling (1) according to one of the claims 4 to 17, **characterized in that** means for detecting the temperature in the direct circulation (9) are associated with the direct circulation (9).

## Revendications

1. Procédé pour l'alimentation en lubrifiant d'unités de palier (17.1, 17.2) d'un embrayage hydrodynamique (1)
- avec une roue primaire (3) et une roue secondaire (4), qui forment ensemble un espace de travail (5) pouvant être rempli de fluide de travail et avec un circuit de fluide de travail (2), comprenant une circulation directe (9) reliant au moins une sortie (7) de l'espace de travail (5) à une entrée (8) dans l'espace de travail (5), une source de fluide de travail (10) et au moins une conduite de remplissage (12) par laquelle l'entrée (8) peut être couplée au moins indirectement à la source de fluide de travail (10) et au moins une conduite de vidange (13) par laquelle la sortie (7) peut être mise en communication au moins indirectement avec la source de fluide de travail (10), la conduite de remplissage (12) et la conduite de vidange (13) étant couplées par l'intermédiaire de la circulation directe (9) à l'entrée (8) et à la sortie (7), ainsi qu'un système d'alimentation en lubrifiant (16) qui peut être couplé à la conduite de remplissage (12),
qui est alimenté en lubrifiant dans tous les états de fonctionnement, l'alimentation du système d'alimentation en lubrifiant (16) étant effectuée, au moins dans l'état de remplissage, via la conduite de remplissage (12) pouvant être couplée à la source de fluide de travail (10), **caractérisé en ce que** dans l'état de fonctionnement de circulation directe (9) du fluide de travail entre la sortie (7) et l'entrée (8), l'alimentation du système d'alimentation en lubrifiant (16) passe uniquement par la circulation directe (9).

2. Procédé selon la revendication 1, **caractérisé en ce que** dans l'état de refroidissement par circulation, tandis que le fluide de travail circule à partir de la circulation directe (9) par la conduite de vidange (13), l'alimentation du système d'alimentation en lubrifiant (16) est assurée par la source de fluide de travail (10) via la conduite de remplissage (12).

3. Procédé selon l'une des revendications 1 ou 2, **caractérisé en ce que** le niveau de pression dans la circulation directe (9) est surveillé et, si une limite prédéfinie n'est plus atteinte, du fluide de travail est ajouté dans la circulation directe (9) en faisant intervenir la conduite de remplissage (12).

4. Embrayage hydrodynamique (1)
avec une roue primaire (3) et une roue secondaire (4), qui forment ensemble un espace de travail (5) pouvant être rempli de fluide de travail ; avec un circuit de fluide de travail (2), comprenant
- une circulation directe (9) reliant au moins une sortie (7) de l'espace de travail (5) à au moins une entrée (8) dans l'espace de travail (5),
- une source de fluide de travail (10),
- au moins une conduite de remplissage (12) par laquelle l'entrée (8) peut être couplée au moins indirectement à la source de fluide de travail (10) et au moins une conduite de vidange (13) par laquelle la sortie (7) peut être mise en communication au moins indirectement avec la source de fluide de travail (10) ;
la conduite de remplissage (12) et la conduite de vidange (13) sont couplées par l'intermédiaire de la circulation directe (9) à l'entrée (8) et à la sortie (9) ;
le circuit de fluide de travail (2) comprend des moyens (18) pour garantir ou interrompre le flux de fluide de travail dans la conduite de remplissage (12) entre la source de fluide de travail (10) et l'entrée (8) et des moyens (20) pour garantir ou interrompre le flux de fluide de travail dans la conduite de vidange (13) entre la sortie (7) et la source de fluide de travail (10) ;
avec un système d'alimentation en lubrifiant (16) destiné à alimenter en lubrifiant au moins les unités de palier (17.1, 17.2) supportant la roue primaire (3) et la roue secondaire (4) ;
le système d'alimentation en lubrifiant (16) est raccordé, dans le sens de l'écoulement, en aval de la source de fluide de travail (10) et en amont des moyens (18) pour garantir ou interrompre le flux de fluide de travail dans la conduite de remplissage (12) entre la source de fluide de travail (10) et l'entrée (8) sur la conduite de remplissage (12) ;
**caractérisé en ce que** :
le système d'alimentation en lubrifiant (16) peut en outre être couplé au moins indirectement à la circulation directe (9) ;
il est prévu des moyens pour la dérivation de fluide de travail à partir de la circulation directe (9).

5. Embrayage hydrodynamique (1) selon la revendication 4, **caractérisé en ce que** :
la conduite de lubrifiant principale (21) du système d'alimentation en lubrifiant (16) peut être couplée directement ou par l'intermédiaire d'une première conduite de communication (22, 50) via la conduite de remplissage (12) à la source de fluide de travail ;
le raccordement de la conduite de lubrifiant principale (21) ou de la première conduite de communication (22, 50) se trouve, dans le sens de l'écoulement, entre la source de fluide de travail (10) et l'espace de travail (5) en amont des moyens (18) pour garantir ou interrompre le flux de fluide de travail dans la conduite de remplissage (12), sur celle-ci ;
les moyens pour la dérivation de fluide de travail à partir de la circulation directe (9) comprennent une deuxième conduite de communication (23, 29, 32), qui relie la circulation directe (9) au système d'alimentation en lubrifiant (16) ;
la communication entre la circulation directe (9) et le système d'alimentation en lubrifiant (16) passe directement par le couplage entre la deuxième conduite de communication (23, 29, 32) et la conduite de lubrifiant principale (21) ou indirectement par la première conduite de communication (22).

6. Embrayage hydrodynamique (1) selon la revendication 5, **caractérisé en ce que** la deuxième conduite de communication (23, 29) est couplée sur la conduite de remplissage (12), dans le sens de l'écoulement de la source de fluide de travail (10) à l'embrayage (1), en aval des moyens (18) pour garantir ou interrompre le flux de fluide de travail dans la conduite de remplissage (12), sur celle-ci, et la communication avec la circulation directe (9) passe par cette partie de la conduite de remplissage (12).

7. Embrayage hydrodynamique (1) selon la revendication 5 ou 6, **caractérisé en ce qu'**il est prévu dans la conduite principale d'alimentation en lubrifiant (21) ou la première conduite de communication (22, 50), dans le sens de l'écoulement des fluide de travail de la sourde de fluide de travail à la conduite de lubrifiant principale (21), des moyens (24, 31) pour bloquer le sens d'écoulement de la circulation directe (9) vers la source de fluide de travail (10) et le raccordement de la deuxième conduite de communication (23, 29) sur la conduite principale d'alimentation en lubrifiant (21) ou la première conduite de communication (22) se trouve en aval des moyens (24) pour bloquer le sens d'écoulement de la circulation directe (9) vers la source de fluide de travail (10).

8. Embrayage hydrodynamique (1) selon l'une des revendications 5 à 7, **caractérisé en ce qu'**il est prévu dans la deuxième conduite de communication (23, 29, 32), en amont du raccordement sur la conduite principale d'alimentation en lubrifiant (21), ou sur la première conduite de communication (22, 50) des moyens pour bloquer le sens d'écoulement de la circulation directe (9) vers la source de fluide de travail (10, 11).

9. Embrayage hydrodynamique (1) selon la revendication 8, **caractérisé en ce qu'**il est prévu dans la deuxième conduite de communication (29), avant le raccordement sur la conduite principale d'alimentation en lubrifiant (21), ou sur la première conduite de communication (50) une soupape de limitation de pression (30).

10. Embrayage hydrodynamique (1) selon l'une des revendications 7 à 9, **caractérisé en ce que** les moyens comprennent une soupape anti-retour (24, 25) disposée dans la première et/ou la deuxième conduite de communication (22, 23).

11. Embrayage hydrodynamique (1) selon la revendication 5, **caractérisé en ce que** :
la deuxième conduite de communication (32) relie la circulation directe (9) au système d'alimentation en lubrifiant (16) sans utiliser aucune partie de la conduite de remplissage (12) ;
il est prévu des moyens (35) pour coupler les deux conduites de communication (50, 32), la conduite de communication réalisant une communication entre la conduite de remplissage (12) et la conduite de lubrifiant principale (21), et la conduite de communication (32) entre la circulation directe (9) et la conduite de lubrifiant principale (21) avec la conduite de lubrifiant principale (21).

12. Embrayage hydrodynamique (1) selon la revendication 11, **caractérisé en ce que** les moyens (35) comprennent un dispositif de soupape réglable (36).

13. Embrayage hydrodynamique (1) selon la revendication 12, **caractérisé en ce que** le dispositif de soupape présente au moins deux positions de commutation pour le couplage sélectif de la conduite de lubrifiant principale (21) avec la conduite de remplissage (12) ou la circulation directe (9).

14. Embrayage hydrodynamique (1) selon l'une des revendications 4 à 13, **caractérisé en ce qu'**il est prévu dans la conduite de lubrifiant principale (21) un dispositif de filtration (26) et celui-ci est associé en outre à un manocontacteur (44) dans une dérivation (27).

15. Embrayage hydrodynamique (1) selon l'une des revendications 4 à 14, **caractérisé en ce qu'**il est prévu dans la conduite de remplissage (12) un dispositif de transfert (15) et les raccordements des conduites de communication (32, 50, 22) se trouvent en aval de celui-ci.

16. Embrayage hydrodynamique (1) selon l'une des revendications 4 à 15, **caractérisé en ce que** la circulation directe (9) est associée à des moyens (46) pour capter le niveau de pression.

17. Embrayage hydrodynamique (1) selon l'une des revendications 4 à 16, **caractérisé en ce qu'**il est prévu dans la conduite de lubrifiant principale (21) au moins une chicane (42).

18. Embrayage hydrodynamique (1) selon l'une des revendications 4 à 17, **caractérisé en ce que** la circulation directe (9) est associée à des moyens pour capter la température dans la circulation directe (9).
